# EUROPEAN PATENT APPLICATION

(11) **EP 1 315 146 A2**
(43) Date of publication of application: **28.05.2003**
(21) Application number: 02257418.0
(22) Date of filing: 25.10.2002
(51) Int. Cl.: G10L 15/14

(54) **Method and apparatus for improving access to numerical information in voice messages**

(30) Priority: 29.10.2001 US 52959
(71) Applicant: Comverse Inc., Wakefield, MA 01880 (US)
(72) Inventor: Kohnle, Scott E., Durham, New Hampshire 03824 (US); Schmandt, Christopher M., Winchester, Massachusetts 01890 (US); Panttaja, Erin M., Somerville, Massachusetts 02144 (US)
(74) Representative: Geary, Stuart Lloyd

(57) **Abstract**

Methods and Apparatus for identifying numerical digits in voice mail messages are provided. In one aspect, a voice mail system identifies digit strings, such as telephone numbers, in voice mail messages and allows a user of the voice mail system to move ahead to a next digit string or to move back to a prior digit string in the voice mail message. The voice mail system may also include a caller identification system that identifies the telephone number of a caller that has left a voice mail message, and allows automatic call back if a digit string in the voice mail message matches the telephone number of the caller.

## Description

### Field of the Invention

The present invention relates generally to methods and apparatus for detecting spoken numerical digits, and more specifically, relates to systems and methods for improving access to numerical digits such as telephone numbers in voice messages.

### Background of the Invention

The use of voice mail systems in wireless and landline telephones has increased significantly over the last several years. Typically in a voice mail message, a caller will provide a brief message and also will provide a return telephone number at which the called party can reach the caller. Often times the called party must replay a voice mail message several times before the called party is able to fully recognize the return telephone number in a message. Having to repeatedly play the message becomes particularly bothersome when dealing with relatively long messages.

Some voice mail systems have attempted to solve this problem by providing an automatic "call back" feature that allows a called party that is listening to a message to execute a call back command that causes the voice mail system to attempt to call the caller that left the voice mail message. These systems typically use caller line identification (also known as caller ID) to identify the caller when recording the message. Drawbacks of these systems are that many callers disable caller identification and/or the caller's system or the called party's system does not support caller ID. A further drawback with these systems occurs when the caller leaves a return telephone number that is different from the number the caller is calling from when the voice mail message is recorded.

Other systems, such as that described in U.S. Patent No. 5,386,493 to Degen, allow a user of a voice mail system to slow down (or speed up) the playback of a message to aid in comprehending a message. In yet another system, described in U.S. Patent No. 5,848,130 to Rochkind, spoken numerical information in a voice mail message is detected, and during playback, the portion of the message containing the numerical information is played at a slower rate than the remainder of the message. A problem with these systems is that the user typically has to repeat an entire message if the numerical information is not fully comprehended by the user during a first playback of the message.

### Summary of the Invention

Embodiments of the present invention provide improved systems and methods for locating numerical digits in voice mail messages and for providing automatic call back to a caller that has a left a voice mail message.

In one embodiment, a voice mail system of the present invention identifies digit strings, such as telephone numbers, in voice mail messages and allows a user of the voice mail system to move ahead to a next digit string or to move back to a prior digit string to enable the user to more easily locate telephone numbers contained in a voice message. The voice mail system may also include a caller identification system that identifies the telephone number of a caller that has left a voice mail message, and in this embodiment, the system allows automatic call back by the user of the system, if a digit string in the voice mail message matches the telephone number provided in the caller identification information. This embodiment provides an improvement over existing call back systems that fail to recognize that the caller may not desire to be called back at the number that the caller was calling from.

In another embodiment, the present invention compares digit strings in voice mail messages with telephone numbers in a user's address book that is accessible by the voice mail system. Automatic call back to a telephone number in the address book that matches numbers in a digit string can then be commanded by the user.

Embodiments of the present invention, also account for errors in the detection of numbers in digit strings in voice mail messages. When comparing numbers in digit strings to telephone numbers in caller identification information, or in an address book, match criteria are established that allows for a match to occur when one or more digits are not identical. The use of match criteria allows for deciding that a match has been made even if one or more digits of a recognized number are different from the number from caller ID. Further, in one embodiment, characteristics of telephone numbers of prior calls are used to further relax the match criteria. For example, if all prior calls to a voice mail system are from the "781" area code, and a call is received that matches completely except for two digits in the area code, then the match criteria may be relaxed to allow for the two digit mismatch in the area code. The match criteria may be user selectable and/or selectable by a system administrator.

### Brief Description of the Drawings

For a better understanding of the present invention, reference is made to the drawings which are incorporated herein by reference and in which:
Fig. 1 is a block diagram of a voice mail system in accordance with one embodiment of the present invention;
Fig. 2 is a flow chart of a process for recognizing digit strings in voice messages in accordance with one embodiment of the present invention;
Fig. 3 is a flow chart of a process for allowing a subscriber to move to digit strings in voice mail messages in accordance with one embodiment of the present invention;
Fig. 4 is a flow chart of a process for calling back a caller in accordance with one embodiment of the present invention; and
Fig. 5 is a block diagram of a voice mail system in accordance with a second embodiment of the present invention.

### Detailed Description

Embodiments of the present invention identify the location of telephone numbers (as well as any other numerical data string) in voice mail messages and allow a listener of a message to skip ahead to the next numerical string in the voice mail message or return to a prior numerical string in the message. Further, embodiments of the present invention provide enhanced call back to allow a user to call back a party that has left a voice mail message

In a first embodiment of a voice message system of the present invention, voice messages are sent to a digit recognizer that identifies each set of digits recognized in the voice mail message and stores information related to the message. The information that is stored can be used by a user or subscriber of the voice mail system in a number of different ways when the user retrieves the voice mail message. The user can execute a command to go to the next digit string, or the user can execute a command to replay the last digit string. Further, in one embodiment, the system compares stored strings of digits with caller identification information, and will provide automatic call back capability when a stored string matches the telephone number from the caller identification information for a voice mail message. Still further, in other embodiments, digit strings can be identified dynamically while a user is playing a voice mail message.

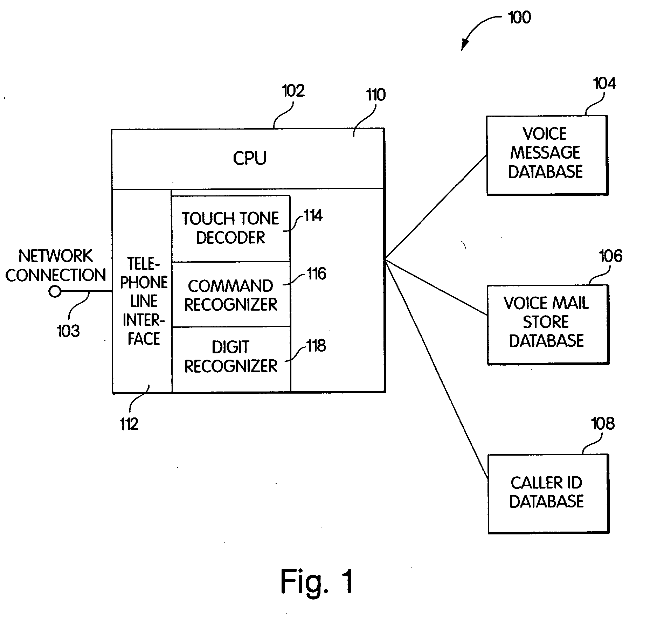

A voice mail system 100 that incorporates features of embodiments of the present invention will now be described with reference to Fig. 1. Voice mail system 100 includes a computer system 102 and three storage units 104, 106 and 108 coupled to the computer system 102. In Fig. 1, the three storage units are shown as devices external to the computer system, however, in other embodiments, the storage units may be implemented within the computer system 102, or could also be implemented as remote storage units coupled to the computer system 102 through a network. Further, the three storage units may be implemented within one single storage device. The voice mail system 100 may be used in a telephony central switching office (wireless or wireline) within a private telephone exchange system or within an answering machine used within a home or office. As is well known in the art, telephone calls may be routed by a switch to a network connection 103 of the voice mail system 100 by a central switch upon the occurrence of a number of events, for example, when a subscriber of the voice mail system directly calls the system to retrieve voice messages or to configure user selectable parameters, in response to a busy signal or "no answer" at a subscriber's call station (i.e., a landline telephone, a wireless telephone, or some other wireless device), or in response to a direct call from a caller desiring to leave a voice mail message for a subscriber.

The computer system may be implemented using one of a number of computers, such as a PENTIUM® based computer using a version of the MICROSOFT® WINDOWS® operating system. As shown in Fig. 1, the computer system includes a central processing unit 110, a telephone interface module 112, a touch tone decoder 114, a command recognizer module 116 and a digit recognizer module 118. The modules of the computer system are implemented using hardware, software or a combination of hardware and software in the computer system. Also, as understood by those skilled in the art, the individual modules shown in Fig. 1 may be replaced by other modules that perform a combination of the functions of two or more modules, or the functions of a particular module may be performed by two or more other modules. Further, while the system 100 is shown as one computer system, the functions of the system could also be performed by two or more networked computers. The central processing unit 110 of the computer system provides flow control and programming of user interfaces in conjunction with each of the modules to enable the voice mail message system 100 to perform the functions described below. Further, as understood by those skilled in the art, the voice mail system may include additional modules not shown, such as analog to digital converters, and recorders and playback modules for recording and playing voice messages.

The telephone interface module 112 is a telephone switch that provides the physical connection to a telephone network for the system 100, and the interface module detects incoming calls, answers calls and places outgoing calls. In one embodiment, the telephone interface is implemented using a model EXS 2000 Programmable Switch available from Lucent Technologies.

The digit speech recognizer module 118 is coupled to the telephone line interface module and the voice message database and performs speech recognition on recorded voice mail messages to detect the presence of numerical digit strings in messages and to detect the location (i.e., start time and stop time) of the strings in the message. The location of the strings is stored for use during playback. The digit speech recognizer may be implemented using one or more of a number of known techniques for recognizing digits, such as those described in U.S. Patents 6,219,407, 5,848,130, 5,509,104 and 4,783,804.

The command speech recognizer module 116 recognizes voice commands provided by a user of the voice mail system 100. The voice command recognizer may be implemented using one of a number of commercially available voice recognition systems such as those available from Philips, Dragon Systems and Microsoft. In one embodiment, the command speech recognizer may be combined with the digit speech recognizer module.

The touch tone decoder module 114 is used to detect touch tones corresponding to telephone key pad entries made by the subscriber. The touch tones may be used by the subscriber as commands to the system. In some embodiments of the present invention, only one of the command speech recognizer module and the touch tone decoder module may be included in a voice mail system. The touch tone decoder module may be implemented using a telephony board such as those available from NMS Communications or Dialogic Corporation.

The voice mail store database 106 is a database used to store voice mail messages received from callers for a user. The caller ID database 108 is an optional database used to store caller ID information associated with incoming calls for voice messages stored in the voice mail store. The voice message database 104 stores attributes associated with messages in the voice mail database. For example, the attributes stored in the voice message database may include the name and time of the caller and may include locations of recognized digit strings in voice mail messages.

In one embodiment of the present invention, the voice mail system 100 may be implemented by providing software modifications to an existing voice mail system to accomplish the additional functions provided by embodiments of the present invention. In one embodiment, the voice mail system 100 is implemented by providing software modifications to the AccessNP Voice Mail System available from Comverse, Inc. of Wakefield, MA.

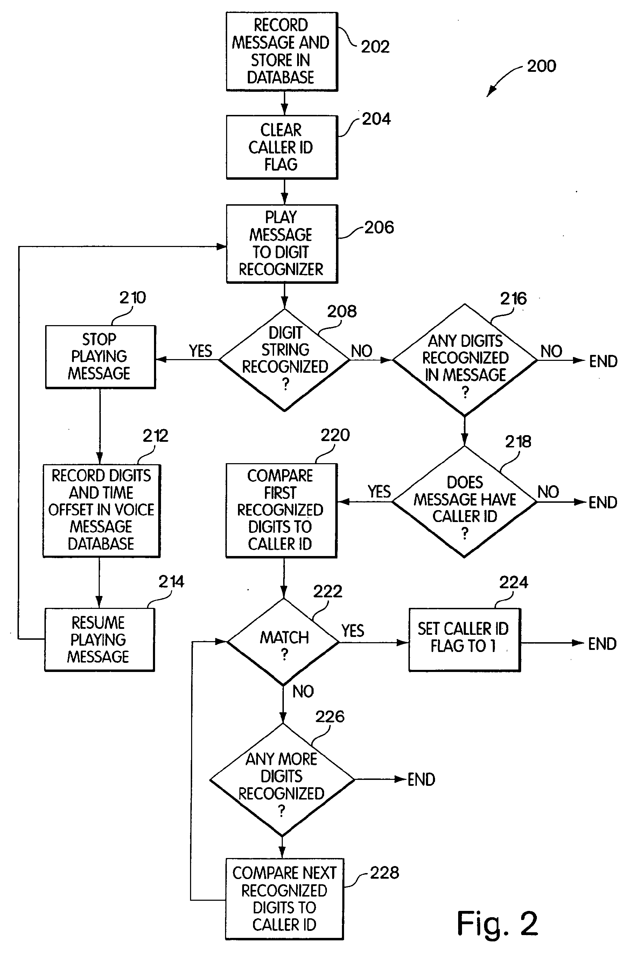

The operation of the voice mail system 100 in different modes of operation will now be described with reference to Figs. 2 - 4. Fig. 2 provides a flow chart of a process 200 for recognizing strings of digits in a voice mail message received by the voice mail system 100 in accordance with one embodiment of the present invention. Once the voice mail message is received, at point 202 of the process, the message is recorded and stored in the voice mail store database 106. At point 204 of the process, a caller ID verified flag is cleared. The message is then played 206 to the digit recognizer. In some embodiments, depending on the encoding format used by the recognizer (i.e., linear PCM, ITU Recommendation G711), the message may be transcoded prior to being played to the digit recognizer. The digit recognizer proceeds to play the message until a string of digits is recognized 208. Once a digit is recognized, the playback is stopped 210, and the string of digits and the time offset in the message to the start (and in some embodiments to the end) of the message are recorded 212 in the voice message database. The playback of the message then continues 214, 208 until another string of digits is detected. If another string is detected in the message, then steps 210 to 214 of the process are repeated. If another string is not detected, or if there are no strings of digits in the message, then the process proceeds to decision block 216.

At decision block 216, a determination is made as to whether any digit strings were detected in the message. If the outcome of block 216 is NO, then the process 200 is complete. If the outcome of block 216 is YES, then the process proceeds to block 218 where the caller ID database is checked to determine whether any caller identification information was received for the message. If the outcome of block 218 is NO, then process 200 is complete. If the outcome of block 218 is YES, then a first string of recognized digits in the message is compared 220 with the caller's telephone number obtained from the caller ID information. If the first string matches 222 the telephone number from the caller identification information, then in step 224, the caller ID verified flag is set to 1, and process 200 is complete. If the first string does not match the caller ID telephone number, then any remaining strings are compared with the caller ID number in steps 226 and 228. If any other strings match the caller id telephone number then the caller ID flag is set to 1, otherwise, process 200 ends.

In process 200 described above, at decision block 208, a determination is made as to whether any digits are recognized in a voice mail message. In one embodiment of the present invention, a digit string length may be set, such that for the outcome of decision block 208 to be YES, any digit strings recognized must have a string length (i.e., number of digits) equal to the set length. This feature allows a user to set the string length to be equal to the number of digits in a telephone number for the locality of the voice mail system to reduce the likelihood that non-telephone number digit strings are detected. In another embodiment, the digit length can be set to a minimum value so that all strings greater than the minimum value are detected.

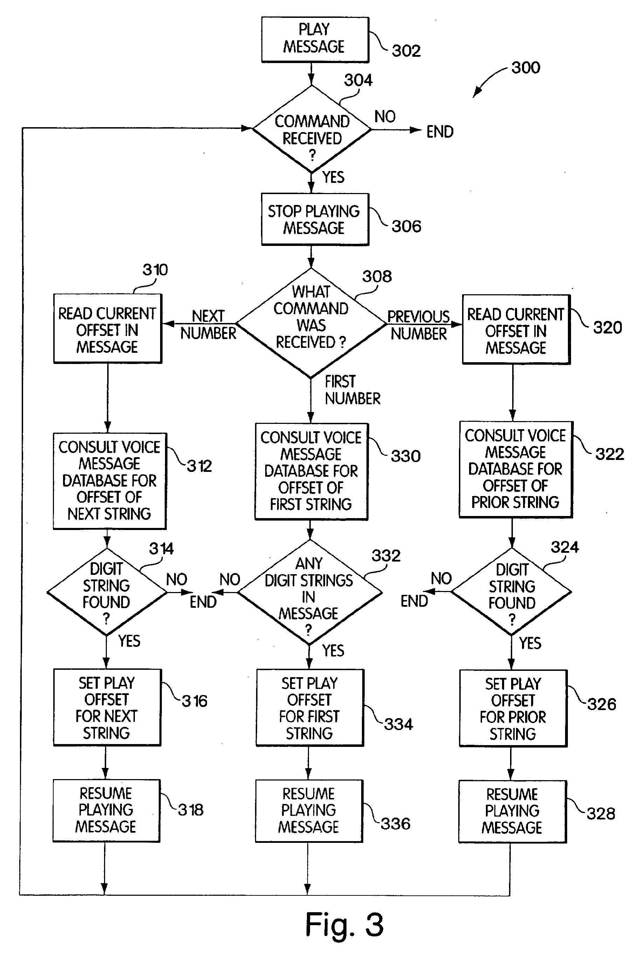

A process 300 of embodiments of the present invention for operating the system 100 to retrieve messages will now be described with reference to Fig. 3. As discussed above, a subscriber or user may access the voice mail system through the telephone interface using a landline or wireless telephone as is well known. After accessing the voice mail system, the subscriber may initiate process 300 by issuing a command to the voice mail system to play a selected stored voice mail message. The subscriber may provide commands to the voice mail system in one of a number of ways, such as uttering commands that are recognized by the command recognizer, or pressing keys on a touch tone phone that are recognized by the touch tone decoder.

In response to the command by the user, the voice message system retrieves the message from the voice mail store database. In addition, in one embodiment, the voice mail message system retrieves any attributes associated with the message from the voice message database, and retrieves any caller ID information associated with the message from the caller ID store database. However, in other embodiments, such as that described below, the attributes and caller ID information is not retrieved until a command requiring its retrieval is provided by the user.

After retrieving a stored message, in step 302 of process 300, the selected message is played for the user. While the subscriber is listening to the message, the voice message system (block 304) waits for a valid command to be issued by the user. If no valid command is received, the message will finish playing and process 300 ends. If a command is received while the message is being played, the command will be interpreted by either the command recognizer or the touch tone decoder. Once a valid command is received, the system stops 306 playing the message. For the process 300 shown in Fig. 3, there are three possible valid interpretations for the command. These interpretations include NEXT NUMBER, PREVIOUS NUMBER, FIRST NUMBER, and at step 308 one of three procedures are followed depending on the command that was received.

If the NEXT NUMBER command was received from the subscriber, then the system determines 310 a current time offset of the voice message, retrieves 312 the attribute information for the message from the voice message database, and determines 314 whether there is a digit string in the message having a time offset greater than the present time offset. If the outcome of block 314 is NO, then process 300 finishes. In one embodiment, the system may provide the subscriber with a message such as "There are no remaining digit strings in the message" prior to ending the process.

If the outcome of block 314 is YES, then in step 316, the system skips ahead in the message to the offset time for the next digit string and resumes 318 playing the message, the process then returns to step 304.

When the PREVIOUS NUMBER command is received from the subscriber, then the system determines 320 a current time offset of the voice message, retrieves 322 the attribute information for the message from the voice message database, and determines 324 whether there is a digit string in the message having a time offset less than the present time offset. If the outcome of block 324 is NO, then process 300 finishes. If the outcome of block 324 is YES, then in step 326, the system moves back in the message to the offset time for the next previous digit string and resumes 328 playing the message, the process then returns to step 304.

Similarly, when the FIRST NUMBER command is received, the system retrieves 330 the attribute information for the message from the voice message database, and determines 332 whether there are any digit strings in the message. If the outcome of block 334 is NO, then process 300 finishes. If the outcome of block 334 is YES, then in step 336, the system moves to the offset time for the first digit string in the message and resumes 338 playing the message, the process then returns to step 304.

In the process 300 described above, to simplify the description, there are three valid commands that can be received by the voice message system during playback. In other embodiments of the present invention, there are a number of other valid commands that may be received by the system during the playback of a message. The other valid commands may be related to moving to a next digit string in a message or may be well-known voice message commands, such as STOP, SKIP TO NEXT MESSAGE, and DELETE MESSAGE.

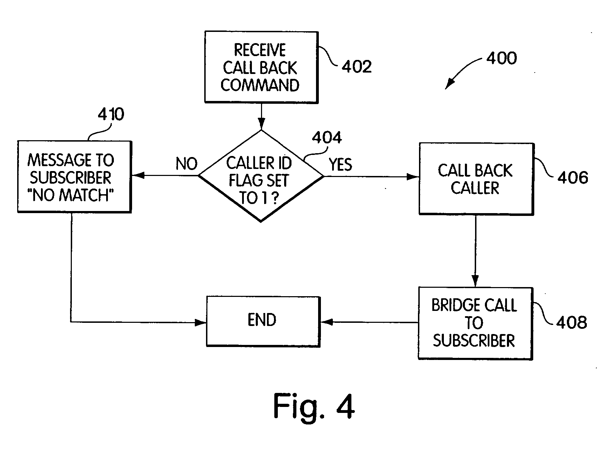

A process 400 of embodiments of the present invention for operating the system 100 to provide subscriber or user call back to a caller that has left a voice message for the subscriber will now be described with reference to Fig. 4. The process 400 begins when the voice mail system 100 receives 402 a command to call back a caller that has left a voice mail message. The command may be received during playback of the message, prior to playback, or after playback. When the call back command is received, the voice mail system at decision block 404 determines whether the caller ID verified flag has been set to 1. As described above with reference to process 200, the caller ID flag is set to 1 when a digit string in the voice mail message matches a telephone number contained in caller ID information for the voice mail message.

If the outcome of decision block 404 is YES, then in step 406, the voice mail system through the telephone interface calls the telephone number from the caller ID information, and bridges 408 the call to the subscriber. If the outcome of decision block 404 is NO, then the voice mail system provides 410 a message to the caller indicating that the telephone number does not match a digit string in the message, and the process ends.

In embodiments of the present invention described above, digit strings in voice messages are compared with telephone numbers contained in caller identification information to determine if a match exists. As understood by those skilled in the art, a number of known techniques exist for comparing two digit strings, such as those described in Wagner R.A and Fischer M.J. "The String to String Correction Problem", Journal of the Assocation for Computing Machinery, 21, 168-173 (1974)("hereinafter "Wagner") and Cormen, Leiserson and Rivest, Introduction to Algorithms, Cambridge, MA, MIT Press, 1990.

In embodiments described above, a call back command causes the voice mail system to call back a caller that has left a voice mail message when a telephone number in caller ID information matches the number in a digit string in the voice mail message. In another embodiment, as will now be described, an exact match between the number in the digit string and the caller ID number is not required, particularly when there is a strong probability that the numbers may be the same. As is well known, errors sometimes occur when a voice recognition system is used to detect a word. Embodiments of the present invention allow for some differences between a caller ID number and numbers in a digit string to account for such errors. An administrator of the voice mail system is able to configure match criteria of the system that indicate how close a match is needed. For example, in one embodiment, a mismatch of only one digit between a caller ID number and a number in a digit string is ignored and results in an acceptable match. In other cases, where less precision is required, a match may be indicated when only 75% of the digits match. Further, because speech recognition errors may cause spoken digits not to be recognized at all, or recognized as multiple digits, in addition to being misrecognized as other digits, match criteria used in embodiments of the present invention can indicate a match when less than all digits or more than all digits are present. In particular, as described in Wagner, referenced above, a minimum string edit distance can be used to describe differences between two strings (e.g., a telephone number and a digit string) as a number of steps of change, where the steps of change include, for example, insert a character, delete a character, or change a character. Each of these steps of change may have a different associated cost, and the difference between two strings may be set equal to the sum of these costs. Match criteria used in embodiments of the present invention may include a maximum acceptable cost.

In further embodiments of the present invention, statistical information based on prior received telephone calls is used to determine how probable it is that there is a match between two numbers even though there may be more than one mismatched digit or even more than a 25% mismatch, for example. In one such embodiment, a log is maintained of all telephone calls (or all recent telephone calls) that have been received by the voice message system that contain telephone number caller ID information. The log may be stored in the caller ID store database. The telephone numbers are grouped based on semantically salient fields. For example, in the U.S., the calls can be grouped based on area code (the first three digits) and exchange (the second three digits). In other countries, the grouping will be different, but may still be based on geographical codes in telephone numbers, such as city codes.

Using the area codes and the exchange codes, the system determines the probability that a particular call will be from a particular area code and a particular exchange within the area code based on prior calls that are received. This probability is used when matching a digit string in a voice mail message to a caller ID telephone number. If the-probability is high that a call will be from a particular area code, then differences of one or two digits in the exchange code may still be an acceptable match. Further if an area code is matched, and the probability of a particular exchange code is high, then differences of one or two digits in the area code may still be an acceptable match. For example, if the probability is high, based on prior calls, that a call is from the 781 area code, then the match requirement may be relaxed so that "7xx" "x8x" or "xx1", where "x" is any number, would be an acceptable match for the area code of the number.

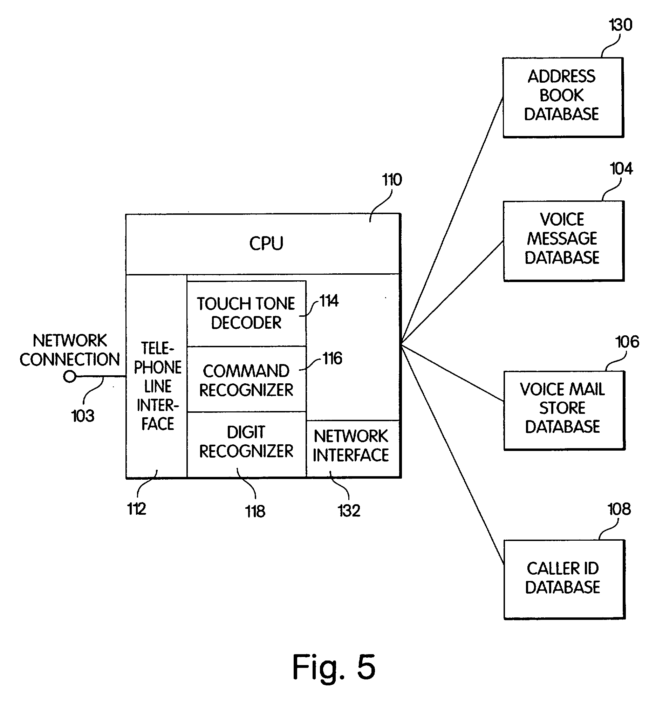

In another embodiment of the present invention, the voice mail system 100 may include an additional address book data base 130 as shown in Fig. 5. In addition, the voice mail system may have a network interface 132 that allows the computer system to couple to computer networks such as the Internet. The address book database contains telephone numbers for contacts of a particular subscriber, and in embodiments of the present invention, the address book information for a particular subscriber can be downloaded to the voice mail system over the Internet or a private intranet from, for example, a hand held computer, or from a contact information program, such as MICROSOFT OUTLOOK. For embodiments having an address book, digit strings in voice mail messages can be compared with all of the telephone numbers in the address book to look for a match (or a close match) before a call back command can be initiated. For embodiments that use the address book, when a close match is achieved between a telephone number in a voice mail digit string and a telephone number from the address book, the address book telephone number, rather than the voice mail telephone number, is used as the telephone number for call back.

In embodiments of the present invention described above, digit recognition is performed on voice mail messages after they are stored in the voice mail store database. In other embodiments, digit recognition may occur at the time that the message is recorded. In addition, digit recognition can be performed to detect digit strings other than telephone numbers, such as social security numbers, street addresses, credit card numbers, flight numbers, or other quantities, such as price quotes. In addition, voice messages used with the present invention may be delivered to users by means other than telephone devices, such as over the Internet or some other network.

In embodiments of the present invention discussed above, a subscriber can move to a next digit string or a prior digit string by providing appropriate commands to a voice mail system. In another embodiment, the voice mail system, either automatically, or in response to a subscriber's command, detects when a digit string is being played, based on previously stored time offsets, and decreases the speed of playback to allow the user to more easily comprehend the numbers of the digit string.

In the description of embodiments of the present invention discussed above, sample commands are provided to aid in describing functions provided by the embodiments of the invention. As understood by those skilled in the art, phrases other than those discussed may be used as commands in voice mail systems of the present invention.

In embodiments of the present invention described above, telephony messages are described as voice mail messages. In other embodiments of the present invention, voice mail systems may also use multimedia messages as well.

Other embodiments are within the scope and spirit of the appended claims. For example, due to the nature of software, functions described above can be implemented using software, hardware, firmware, hardwiring, or combinations of any of these. Features implementing functions may also be physically located at various positions, including being distributed such that portions of functions are implemented at different physical locations.

Having thus described at least one illustrative embodiment of the invention, various alterations, modifications and improvements will readily occur to those skilled in the art. Such alterations, modifications and improvements are intended to be within the scope and spirit of the invention. Accordingly, the foregoing description is by way of example only and is not intended as limiting. The invention's limit is defined only in the following claims and the equivalents thereto.

## Claims

1. A voice message system comprising:
at least one input to receive a voice message from a caller and to receive commands from a user of the system;
a digit recognizer that detects a location of at least one set of digits in the voice message; and
an output that in response to a command from the user plays a portion of the voice message containing the at least one set of digits.

2. The voice message system of claim 1, wherein the digit recognizer detects a time offset in the message for the at least one set of digits, and in response to the command from the user, the system is configured to respond by playing the message at the detected time offset.

3. The voice message system of claim 2, wherein the command is a command to skip ahead to a next set of digits, and wherein the voice message system is configured to respond to the command by moving ahead in the playing of a message to the next set of digits.

4. The voice message system of claim 2, wherein the command is a command to move back to a prior set of digits, and wherein the voice message system is configured to respond to the command by moving the playing of a message back to the prior set of digits.

5. The voice message system of claim 2, wherein the system is configured to receive a telephone number of a caller of the voice message and to compare numbers in a set of digits detected with the telephone number of the caller to determine if the telephone number substantially matches the numbers in the set of digits detected, and wherein the system is responsive to a call back command by a user to call back the telephone number of the caller when the telephone number of the caller substantially matches the numbers in the set of digits detected.

6. The voice message system of claim 1, wherein the system includes an address book database having a plurality of telephone numbers, and wherein the system is configured to compare numbers in a set of digits detected with each of the plurality of telephone numbers of the address book database to determine if an address book telephone number in the plurality of telephone numbers substantially matches the numbers in the set of digits detected, and wherein the system is responsive to a call back command by a user to call back the address book telephone number when the address book telephone number substantially matches the numbers in the set of digits detected.

7. The voice message system of claim 5, wherein match criteria are used to determine whether there is a match between a telephone number of a caller and numbers in the set of digits detected, and wherein the system includes a database of telephone numbers of prior callers of the system, and wherein the system is configured to determine relationships among telephone numbers of the database and to alter the match criteria based on the relationships.

8. The voice message system of claim 1, wherein the system is configured to receive a telephone number of a caller of the voice message and to compare numbers in a set of digits detected with the telephone number of the caller to determine if the telephone number substantially matches the numbers in the set of digits detected, and wherein the system is responsive to a call back command by a user to call back the telephone number of the caller when the telephone number of the caller substantially matches the numbers in the set of digits detected.

9. The voice message system of claim 8, wherein match criteria are used to determine whether there is a match between a telephone number of a caller and numbers in the set of digits detected, and wherein the system includes a database of telephone numbers of prior callers of the system, and wherein the system is configured to determine relationships among telephone numbers of the database and to alter the match criteria based on the relationships.

10. A method comprising:
receiving a voice message from a caller;
detecting a location of at least one set of digits in the voice message;
receiving a command from a user to play the at least one set of digits; and
in response to receiving the command, playing the at least one set of digits.

11. The method of claim 10, further comprising:
detecting a time offset in the voice message for the at least one set of digits; and
responding to the command by playing the message at the detected time offset.

12. The method of claim 11, further comprising
receiving a telephone number of the caller;
comparing the telephone number with numbers in the at least one set of digits using match criteria; and
calling back the telephone number in response to a command when the telephone number matches the numbers in the at least one set of digits according to the match criteria.

13. The method of claim 11, further comprising:
comparing numbers in the at least one set of digits with each of a plurality of telephone numbers to detect one of the plurality of telephone numbers that substantially matches the numbers in the at least one set of digits; and
calling back the one of the plurality of telephone numbers in response to a command when the one of the plurality of telephone numbers substantially matches the number in the at least one set of digits.

14. The method of claim 12, further comprising:
storing telephone numbers of prior callers;
determining at least one relationship among the telephone numbers of the prior callers; and
altering the match criteria based on the relationship.

15. The method of claim 10, further comprising
receiving a telephone number of the caller;
comparing the telephone number with numbers in the at least one set of digits using match criteria; and
calling back the telephone number in response to a command when the telephone number matches the numbers in the at least one set of digits according to the match criteria.

16. A voice message system comprising:
at least one input to receive a voice message from a caller; and
means for detecting a location of at least one set of digits in the voice message, and in response to a command from a user, playing the at least one set of digits.

17. The voice message system of claim 16, further comprising:
means for detecting a time offset in the voice message for the at least one set of digits and playing the message at the detected time offset.

18. The voice message system of claim 17, further comprising
means for comparing the telephone number of a caller with numbers in the at least one set of digits using match criteria; and
means for calling back the telephone number in response to a command when the telephone number matches the numbers in the at least one set of digits according to the match criteria.

19. The voice message system of claim 17, further comprising:
means for comparing numbers in the at least one set of digits with each of a plurality of telephone numbers to detect one of the plurality of telephone numbers that substantially matches the numbers in the at least one set of digits; and
means for calling back the one of the plurality of telephone numbers in response to a command when the one of the plurality of telephone numbers substantially matches the number in the at least one set of digits.

20. The voice message system of claim 18, further comprising:
means for determining at least one relationship among the telephone numbers of prior callers; and
means for altering the match criteria based on the relationship.

21. The voice message system of claim 16, further comprising
means for comparing numbers in the at least one set of digits with each of a plurality of telephone numbers to detect one of the plurality of telephone numbers that substantially matches the numbers in the at least one set of digits; and
means for calling back the one of the plurality of telephone numbers in response to a command when the one of the plurality of telephone numbers substantially matches the number in the at least one set of digits.

22. A voice message system comprising:
at least one input to receive a voice message from a caller and a telephone number of the caller; and
a digit recognizer that detects at least one set of digits in the voice message;
wherein the system is configured to compare numbers in the set of digits in the voice mail message with the telephone number of the caller to determine if the telephone number substantially matches the numbers in the set of digits detected, and wherein the system is responsive to a call back command by a user to call back the telephone number of the caller when the telephone number of the caller substantially matches the numbers in the set of digits detected.

23. The voice message system of claim 22, wherein match criteria are used to determine whether there is a match between a telephone number of a caller and numbers in the set of digits detected, and wherein the system includes a database of telephone numbers of prior callers of the system, and wherein the system is configured to determine relationships among telephone numbers of the database and to alter the match criteria based on the relationships.

24. The voice message system of claim 23, wherein the relationships include a common salient portion of the telephone number.

25. A method comprising:
receiving a voice message from a caller and receiving a telephone number of the caller;
detecting at least one set of digits in the voice message;
comparing the telephone number of the caller with numbers in the at least one set of digits using match criteria; and
calling back the telephone number in response to a command when the telephone number matches the numbers in the at least one set of digits according to the match criteria.

26. The method of claim 25, further comprising:
storing telephone numbers of prior callers;
determining at least one relationship among the telephone numbers of the prior callers; and
altering the match criteria based on the relationship.

27. The method of claim 25, wherein the at least one relationship includes a common salient portion of the telephone number.

28. A voice message system comprising:
at least one input to receive a voice message from a caller and a telephone number of the caller;
a digit recognizer that detects at least one set of digits in the voice message;
means for comparing the telephone number of the caller with numbers in the at least one set of digits using match criteria; and
means for calling back the telephone number in response to a command when the telephone number matches the numbers in the at least one set of digits according to the match criteria.

29. The voice message system of claim 28, further comprising:
means for determining at least one relationship among the telephone numbers of prior callers; and
means for altering the match criteria based on the relationship.

30. The voice message system of claim 29, wherein the relationship includes a common salient portion of the telephone number.
